# EUROPEAN PATENT APPLICATION

(11) **EP 3 309 707 A1**
(43) Date of publication of application: **18.04.2018**
(21) Application number: 16193663.8
(22) Date of filing: 13.10.2016
(51) Int. Cl.: G06K 9/00, G06K 9/46

(54) **DEVICE AND METHOD FOR GRADIENT-BASED OBJECT RECOGNITION OF AN INPUT IMAGE**

(71) Applicant: Conti Temic Microelectronic GmbH, 90411 Nürnberg (DE)
(72) Inventor: Karg, Michelle, 88279 Amtzell (DE); Scharfenberger, Christian, 88279 Amtzell (DE); Thiel, Robert, 88138 Niederstaufen (DE)

(57) **Abstract**

The present invention relates to a device (100) for gradient-based object recognition of an input image (A), the device (100) comprising: a patch generator (10), which is configured to subdivide the input image (A) into a plurality of patches; a feature extractor (20), which is configured to extract a plurality of features within each of the patches based on a histogram of gradients of the patches; a scoring map generator (30), which is configured to generate at least one scoring map based on the extracted plurality of features; and an object map generator (40), which is configured to generate a object map based on the generated at least one scoring map.

## Description

### FIELD OF THE INVENTION

The present invention relates to the field of object recognition. Particularly, the present invention relates to a device and a method for gradient-based object recognition of an input image for a vehicle.

### BACKGROUND OF THE INVENTION

Existing solutions to object detection can be broken down into two major components: hypotheses generation and classification.

Conventional approaches to object detection generate hypotheses by generating a pixel neighborhood, patches, of N x M pixels centered at each pixel in an image and extracting features in each patch.

Creating hypotheses by generating patches for each pixel in an image is computationally expensive and becomes computationally intractable when using expensive features such as texture.

Existing approaches to hypotheses generation attempted to address this issue by identifying regions of interest, salient regions, as a first step and applying the generation of hypotheses on interesting regions only.

The most important problem to address here is the careful selection of quantitative attributes to extract interesting regions forming pedestrians, vehicles or other objects of interests. This results in the following challenges in the state-of-the art methods:
i) The selection of attributes is tailored to a specific object type, for instance pedestrian, and can most likely not be used for other objects such as vehicles.
ii) High-level and semantic attributes chosen are not re-used for further classification.
iii) Existing approaches are sensitive to background and tend to emphasize background rather than interesting objects. This results in a loss of important regions forming pedestrians, vehicles, etc.
iv) Existing approaches are sensitive to illumination, cast shadows and different weather conditions. This may result in a loss of important regions forming pedestrians, vehicles, etc.
v) Existing approaches are computationally expensive due to their emphasis of suppressing uninteresting regions.
   This makes them impractical for applications aiming to reduce the computational complexity of generating patches for each pixel in an image to save resources on an embedded system.
vi) Finally, the majority of high-performing approaches rely on previously-trained models, which may make them impractical in unknown scenarios.

### SUMMARY OF THE INVENTION

There may be a need to improve device and methods for object recognition.

These needs are met by the subject-matter of the independent claims. Further exemplary embodiments are evident from the dependent claims and the following description.

An aspect of the present invention relates to a device for gradient-based object recognition of an input image, the device comprising: a patch generator, which is configured to subdivide the input image into a plurality of patches; a feature extractor, which is configured to extract a plurality of features within each of the patches, e.g. within each patch of the plurality of patches, based on a histogram of gradients of the patches; a scoring map generator, which is configured to generate at least one scoring map based on the extracted plurality of features; and an object map generator, which is configured to generate an object map based on the generated at least one scoring map.

In other words, the present invention describes an approach to identify regions of interests in images and discarding regions with no potential target object in a very generic and efficient manner. This avoids generating hypotheses based on patches for each pixel in an image.

The present method for object recognition of an input image advantageously provides reduced additional computational efforts since the prosed approach relies on using histograms of gradients, HoG, features that are broadly used for a variety of tasks such as pedestrian, vehicle, truck and traffic sign detection among others.

The present methods for object recognition of an input image may make limited use of HoG features only, which form the basis for generating features for classification.

The present method for object recognition bases on the idea that man-made objects in road scenarios are mainly characterized by vertical structures, whereas background such as the road surface or sky covering large parts of an image often include cluttered and small horizontal structures. This makes the approach insensitive to background clutter and avoids the loss of important regions.

The present method for object recognition of an input image advantageously provides a method insensitive to illumination and weather condition in contrast to approaches relying on intensity or color features by the use of HoG features.

The present method for object recognition of an input image advantageously provides a computationally inexpensive approach due to its use of features that are computed for classification anyways, and due to the smart selection of features that avoid emphasizing background.

The present method does not rely on previously-trained models. This makes the present method feasible for unknown scenarios.

The present method for object recognition of an input image may be applied to fields of image analysis. For instance, the device and the method may be used for analysis of radar signals or images, or in the field of magnetic resonance imaging, MRI, or computed tomography, CT, imaging, infrared-based imaging methods, or ultrasonic imaging methods.

A further, second aspect of the present invention relates to a method for gradient-based object recognition of an input image, the method comprising the following steps of:
i) Subdividing the input image into a plurality of patches.
ii) Extracting a plurality of features within the patch based on a histogram of gradients of the patches.
iii) Generating at least one scoring map based on the extracted plurality of features.
iv) Generating an object map based on the generated at least one scoring map.

According to an exemplary embodiment of the present invention, the scoring map generator is configured to generate at least two scoring maps in form of a positive scoring map and a negative scoring map.

According to an exemplary embodiment of the present invention, the scoring map generator is configured to generate the positive scoring map for counting horizontal edges within the patch and the negative scoring map for counting vertical edges within the patch.

This advantageously allows that the scores of the maps are computed based on features. The features represent horizontal or vertical borders. Such features can be selected features of the histogram of gradients, HoG.

HoG features are commonly computed in computer vision and usually for object detection in driver assistance system. When the object detection algorithm is based on HOG features, using these features has the advantage that they require no additional computation cost.

According to an exemplary embodiment of the present invention, the object map generator is configured to generate the object map based on a combination of the generated positive scoring map and the generated negative scoring map. This advantageously allows an improved object recognition performance.

According to an exemplary embodiment of the present invention, the object map generator is configured to combine the generated positive scoring map and the generated negative scoring map using a logic gate. This provides advantageously an improved processing of the scoring maps.

According to an exemplary embodiment of the present invention, the object map generator is configured to combine the generated positive scoring map and the generated negative scoring map using a machine learning method. This advantageously allows an improved object recognition performance.

According to an exemplary embodiment of the present invention, the object map generator is configured to combine the generated positive scoring map and the generated negative scoring map using a conditional random fields or a logistic regression method. This advantageously allows an improved object recognition performance.

According to an exemplary embodiment of the present invention, the object map generator is configured to generate the object map in terms of a map providing a probability or an absolute value that a patch either belongs to an object or not to an object.

According to an exemplary embodiment of the present invention, the object map generator is configured to generate the object map in terms of a Boolean map of type hard-threshold.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in a micro-controller or in any other side-processor or as a hardware circuit within an application specific integrated circuit, ASIC, CPLD or FPGA.

The present invention can be implemented in digital electronic circuitry or in computer hardware, firmware, software, or in combinations thereof, for instance in available hardware of conventional medical imaging devices or in new hardware dedicated for processing the methods described herein.

### BRIEF DESCRIPTION OF THE DRAWINGS

A more complete appreciation of the invention and the attendant advantages thereof will be clearly understood by reference to the following schematic drawings, which are not to scale, wherein:
- Fig. 1: shows the sketch of a schematic flowchart architecture of the proposed approach according to an exemplary embodiment of the present invention;
- Fig. 2: shows in an example input image and example results according to an exemplary embodiment of the present invention;
- Fig. 3: shows a schematic diagram of the device for gradient-based object recognition of an input image according to an exemplary embodiment of the present invention; and
- Fig. 4: shows another sketch of the method for gradient-based object recognition of an input image according to an exemplary embodiment of the present invention.

### DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

The term "patch" as used according to the present invention may refer to a section or a portion of an image, in other words a section or a portion of a two-dimensional data field or structure. A patch may be defined by a shape and a sizes. According to an exemplary embodiment of the present invention, a patch may have the shape of a square, of a rectangle of a circle or of a polygon. According to an exemplary embodiment of the present invention, a patch may have a size of a single pixel or of a group of pixels or of the entire image. The term "patch" may also be understood as a pixel neighborhood, e.g. a group of pixels adjacent to at least one pixel.

The term "scoring map", also called "score map", as used according to the present invention may refer to another representation of original data in grey scale or in a threshold type. In other words, a grey scale representation of the input image. The grey scale per pixel of the scoring map provides evidence on whether this pixel belongs to an object or not, e.g. in other words to background or non-background. In other words, the value of the scoring map of the pixel defines a probability of an object represented by the pixel of being located there.

The term "vertical borders" as used according to the present invention may refer to boarders in an image, which are within a predefined range of angles, e.g. for instance -/+ 20°, or - /+ 10° or -/+ 5° of the vertical direction. Vertical as such may be a direction passing by a given point is said to be vertical if it is locally aligned with the local gravity vector at that point, from up to down, or down to up, e.g. perpendicular to the horizon or a skyline.

The term "horizontal borders" as used according to the present invention may refer to boarders in an image, which are within a predefined range of angles, e.g. for instance -/+ 20°, or - /+ 10° or -/+ 5° of the horizontal direction. Horizontal as such may be a direction parallel to the horizon or a skyline or perpendicular to up to down or to down to up or to vertical.

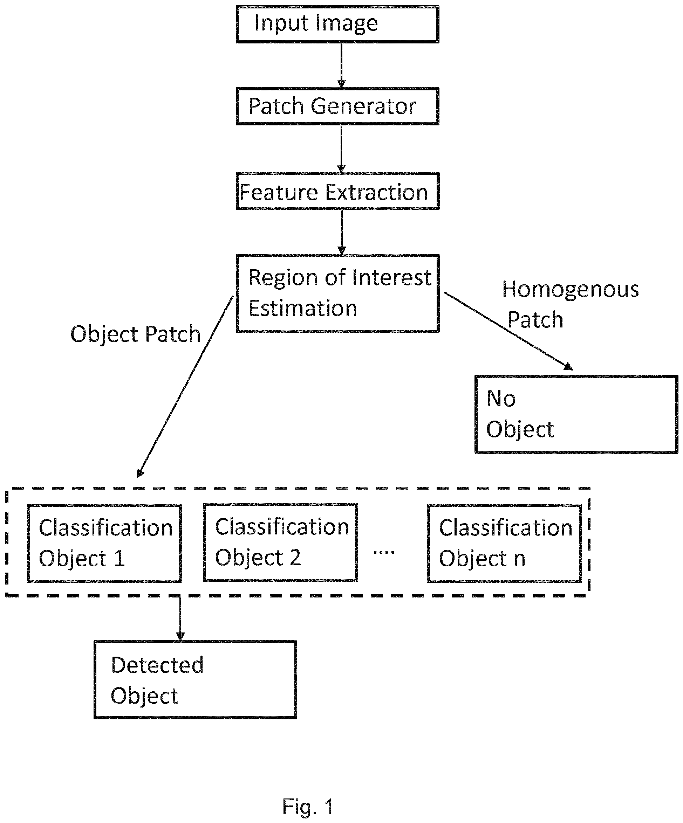

Fig. 1 shows the sketch of the flowchart architecture of the proposed approach according to an exemplary embodiment of the present invention.

The method may be used to differentiate between object regions and non-object regions. For road-scene scenarios, the assumption can be made that relevant objects have vertical borders. Flat street regions, grass regions, or sky regions often do not contain any noticeable vertical borders.

Horizontal borders may appear in these regions due to illumination changes from the center of an image to its border. Based on the input image, two maps are computed. High scores on the positive map indicate an object, whereas high scores on the negative map indicate a homogeneous area.

The scores of the maps are computed based on features as provided by a patch generator and the feature extraction module as depicted in Fig. 1. The provided features represent horizontal or vertical borders. Such features can be selected features of the histogram of gradients, HOG. HOG features are commonly computed in computer vision and usually for object detection in driver assistance systems.

When the object detection algorithm is based on HOG features, using these features has the advantage that they require no additional computation cost.

The positive scoring map may be related to counting the horizontal edges in a cell of size N x M; the negative scoring map may be related to counting the vertical edges in a cell of size N x M. Such a relationship could be, e.g. the value of selected bins of the HOG feature descriptor.

Each map is processed individually to provide a probability or an absolute value, e.g. within the range [0, 1], that a cell either belongs to an object or belongs not to an object. Such processing can be a hard threshold-based processing method.

According to an exemplary embodiment of the present invention, the positive scoring map and the negative scoring map are for instance combined using a logic gate, AND, OR, XOR, NOT, NAND, NOR or XNOR.

According to an exemplary embodiment of the present invention, for binary positive and negative score maps, the combination can be the AND logic. In this case, the result is a binary output map that indicates for each cell whether it belongs to an object or not. When the negative and the positive object map are probabilistic, the output map can be either binary or probabilistic.

Fig. 1 shows the schematic flowchart diagram used for the device and the method for object recognition of an input image for a vehicle.

The combination can be optimized by any learning algorithm. The outcome map has low, e.g. set to 0, values for non-object regions and large, e.g. set to 1, values for object regions.

The outcome map or object map can be used for the following:
i) As a simple texture map where objects may be located and where not.
ii) For any boundary detection.
iii) For reducing the computational cost for sliding window object detection.

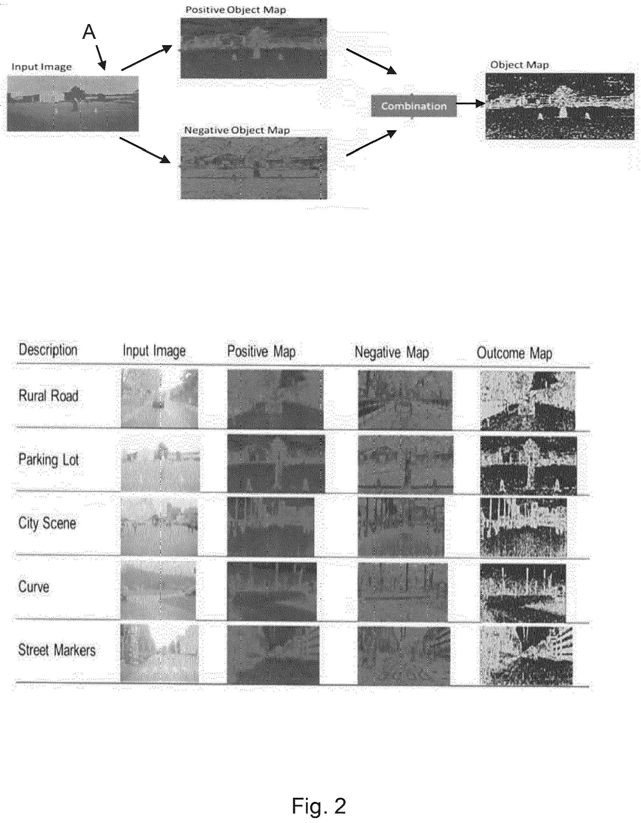

Fig. 2 shows in an example input image and example results according to an exemplary embodiment of the present invention.

In particular, Fig. 2 shows in the top panel on the left: an original image or input image A. On the top is shown a positive scoring map or a positive object map. On the bottom is shown: a negative scoring map or a negative object map. On the right is shown: an object map as a combination of the positive scoring map and of the negative scoring map.

Fig. 2 shows in the bottom panel a table of various examples of processing of input images.

An input image, a positive map, a negative map, and an outcome map, e.g. an object map, are shown for different scenarios.

The different scenarios as depicted in the table are a rural road, a parking lot, a city scene, a curve on a road, and street markers on a road.

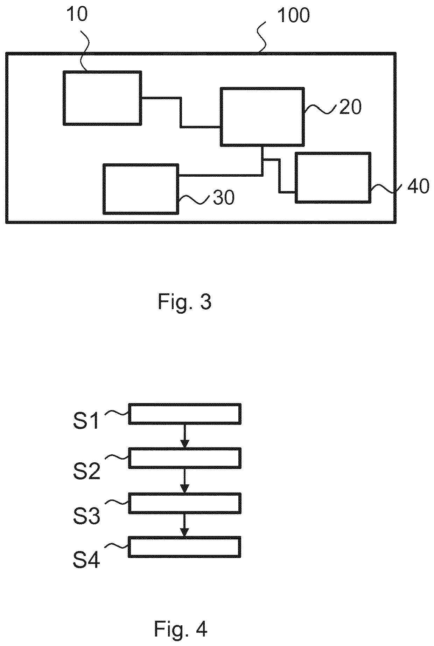

Fig. 3 shows a schematic diagram of the device for gradient-based object recognition of an input image according to an exemplary embodiment of the present invention.

The device 100 may comprise a patch generator 10, a feature extractor 20, a scoring map generator 30, and an object map generator 40.

The patch generator 10 is configured to subdivide the input image A into a plurality of patches.

The feature extractor 20 is configured to extract a plurality of features within each of the patches as provided by subdividing the input image based on a histogram of gradients of the patches.

The scoring map generator 30 is configured to generate at least one scoring map based on the extracted plurality of features.

The object map generator 40 is configured to generate an object map based on the generated at least one scoring map.

According to an exemplary embodiment of the present invention, the computation of vertical and horizontal edge maps - positive, negative object maps - may be based on other approaches than histogram of gradients, HoG, approaches.

According to an exemplary embodiment of the present invention, the computation of object maps may be based on different combinations of positive and negative object maps. This may include simple operators such as AND, OR, or other logic gate combinations but also advance merging functions based on conditional random fields, regressions, deep learning, etc.

According to an exemplary embodiment of the present invention, the input images may be captured by ultrasound, Lidar, radar, or image acquiring methods.

According to an exemplary embodiment of the present invention, a computation of an inverse object maps may be conducted, wherein 0 is set for an object region in the map, 1 is set for a background.

According to an exemplary embodiment of the present invention, the computing of the vertical and/or the horizontal edges is based on image gradients only incorporating additional features to the object maps.

Fig. 4 shows a schematic diagram of the method for object recognition according to an exemplary embodiment of the present invention.

The method for object recognition of an input image A for a vehicle, may comprise the following steps:
As a first step of the method, subdividing S1 the input image A into a plurality of patches may be performed.

As a second step of the method, extracting S2 a plurality of features within the patch based on a histogram of gradients of the patches may be performed.

As a third step of the method, generating S3 at least one scoring map based on the extracted plurality of features is conducted.

As a fourth step of the method, generating S4 an object map based on the generated at least one scoring map is conducted.

The present invention advantageously provides Re-use of existing feature extractors such as HoG features and requires a low computational complexity for computing the final map.

The present invention advantageously provides reducing the computational complexity of the classification stage by preprocessing region of interests and guiding the classifier towards relevant regions only.

The approach is designed to be generic, in particular, the present method:
i) applies to a large set of object classes, but needs to be computed only once beforehand
ii) applies to any object scale: can be computed for all pyramid levels and object sizes
iii) is highly robust to shadows and street markers

In other words, the present invention advantageously provides the generation of negative and positive scoring maps based on vertical and horizontal edges.

It has to be noted that embodiments of the present invention are described with reference to different subject-matters. In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage. Any reference signs in the claims should not be considered as limiting the scope.

## Claims

1. Device (100) for gradient-based object recognition of an input image (A), the device (100) comprising:
- a patch generator (10), which is configured to subdivide the input image (A) into a plurality of patches;
- a feature extractor (20), which is configured to extract a plurality of features within each of the patches based on a histogram of gradients of the patches;
- a scoring map generator (30), which is configured to generate at least one scoring map based on the extracted plurality of features; and
- an object map generator (40), which is configured to generate an object map based on the generated at least one scoring map.

2. The device (100) according to claim 1, wherein the scoring map generator (30) is configured to generate at least two scoring maps in form of a positive scoring map and in form of a negative scoring map.

3. The device according to claim 2,
wherein the scoring map generator (30) is configured to generate the positive scoring map for counting horizontal edges within the patch and the negative scoring map for counting vertical edges within the patch.

4. The device according to any one of the preceding claims 2 to 3,
wherein the object map generator (40) is configured to generate the object map based on a combination of the generated positive scoring map and the generated negative scoring map.

5. The device according to claim 4,
wherein the object map generator (40) is configured to combine the generated positive scoring map and the generated negative scoring map using a logic gate combination.

6. The device according to claim 4,
wherein the object map generator (40) is configured to combine the generated positive scoring map and the generated negative scoring map using a machine learning method.

7. The device according to claim 4,
wherein the object map generator (40) is configured to combine the generated positive scoring map and the generated negative scoring map using a conditional random fields method or a logistic regression method.

8. The device according to any one of the preceding claims,
wherein the object map generator (40) is configured to generate the object map in terms of a map providing a probability or an absolute value that a patch either belongs to an object or not to an object.

9. The device according to any one of the preceding claims,
wherein the object map generator (40) is configured to generate the object map in terms of a Boolean map of type hard-threshold.

10. A method for gradient-based object recognition of an input image (A), the method comprising the following steps of:
- Subdividing (S1) the input image (A) into a plurality of patches;
- Extracting (S2) a plurality of features within each of the patches based on a histogram of gradients of the patches;
- Generating (S3) at least one scoring map based on the extracted plurality of features; and
- Generating (S4) an object map based on the generated at least one scoring map.
